# FASCICULE DE BREVET EUROPEEN

(11) **EP 1 485 329 B1**
(45) Date de publication et mention de la délivrance du brevet: **06.05.2009**
(21) Numéro de dépôt: 03722691.7
(22) Date de dépôt: 04.03.2003
(51) Int. Cl.: C04B 11/028, F27D 3/08, F27B 17/00, B01F 3/06, B01F 15/06

(54) **DISPOSITIF DE SECHAGE ET/OU CUISSON DE GYPSE**
VORRICHTUNG ZUM TROCKNEN UND/ODER BRENNEN VON GIPS
DEVICE FOR DRYING AND/OR FIRING GYPSUM

(30) Priorité: 08.03.2002 FR 0202955
(43) Date de publication de la demande: 15.12.2004
(73) Titulaire: Lafarge Platres S.A., 84915 Avignon Cédex (FR)
(72) Inventeur: FALINOWER, Charles, F-84200 Carpentras (FR)
(74) Mandataire: Mérigeault, Shona
(86) Numéro de dépôt international: PCT/FR2003/000692
(87) Numéro de publication internationale: WO 2003/076356

(56) Documents cités:
- EP-A- 0 083 549
- EP-A- 0 230 793
- FR-A- 2 311 764
- FR-A- 2 493 826
- US-A- 3 329 417
- US-A- 4 101 630

## Description

La présente invention concerne un dispositif de cuisson, et en particulier un dispositif de cuisson de sulfate de calcium dihydrate (gypse) en sulfate de calcium semi-hydrate (plâtre).

Le document FR-A-2 493 826 décrit un procédé de cuisson de gypse dans lequel un lit de gypse est chauffé par introduction directe de gaz chaud et maintenu à une température appropriée à la production de sulfate de calcium semi-hydrate, de l'eau étant pulvérisée dans les gaz chauds avant que ceux-ci n'entrent en contact avec le gypse.

Le document EP-A-230 793 décrit un procédé et un dispositif de cuisson de sulfate de calcium dihydrate. Dans ce document, on introduit directement des gaz de combustion par l'intermédiaire d'un premier tube s'étendant vers le bas dans un lit de manière à cuire. Les gaz très chauds de combustion sont refroidis avant d'entrer en contact avec la matière à cuire du lit. Pour cela, des gaz moins chauds de recyclage, du gypse ou les deux sont introduits dans un deuxième tube entourant partiellement le premier tube absorbant ainsi une partie de la chaleur des gaz chauds par conduction à travers la paroi du premier tube. Le gypse rentre en contact avec la matière du lit avant de rentrer en contact avec les gaz chauds.

Ce dispositif présente des inconvénients. Le gypse introduit entre les deux tubes a tendance à se bâtir sur les tubes et se colmater bloquant ainsi le dispositif de cuisson. Ce problème est particulièrement sensille lorsque le matériau à cuire est du gypse synthétique par exemple du désulfogypse.

Le dispositif de cuisson décrit dans le document EP-A-0 284 464 comprend un premier tube d'introduction d'air chaud dans la matière à cuire d'un lit. Ce premier tube est entouré d'un deuxième tube. De la matière fraîche à cuire passe par l'espace intermédiaire entre le premier et le deuxième tube. Des chicanes sont placées entre le premier et le deuxième tube sur le passage de la matière fraîche.

Ce dispositif présente des inconvénients. Ce dispositif impose le séchage préalable du gypse avant son introduction dans le dispositif de cuisson, afin d'éviter un colmatage. En outre, ce dispositif nécessite du gypse naturel concassé qu'il faut broyer à la sortie du four; ce dispositif n'est donc pas approprié pour du désulfogypse, et plus généralement des gypses de synthèse.

Ces dispositifs ont également des inconvénients communs. La déshydratation du gypse est insuffisante et non homogène. Le rendement thermique de ces dispositifs est en outre réduit. La surpression à l'intérieur de ces dispositifs nécessite en outre des mesures de sécurité et des matériels complémentaires tels que des surpresseurs avec des coûts d'installation et d'entretien élevés. De façon générale les temps de cuisson du gypse dans ces installations sont importants d'où des débits faibles en regard de leur taille et une réactivité faible du semi hydrate obtenu.

L'invention a ainsi pour objet d'apporter une solution à un ou plusieurs de ces inconvénients.

L'invention concerne ainsi un sécheur/cuiseur de gypse comprenant :
- un espace de cuisson;
- un premier conduit présentant une entrée raccordée à une source de gaz chauds, et une sortie débouchant dans l'espace de cuisson;
- un deuxième conduit présentant une entrée raccordée à une source de gypse et une sortie débouchant dans l'espace de cuisson, le deuxième conduit étant concentrique avec le premier conduit;
- une vis de gavage disposée au moins partiellement dans le deuxième conduit, ladite vis entraînant le gypse dans l'espace de cuisson.

Selon un mode de réalisation, le deuxième conduit entoure le premier conduit sur une partie de sa longueur.

Selon un mode de réalisation, le deuxième conduit entoure le premier conduit sur sensiblement sa longueur.

Selon un mode de réalisation, l'espace de cuisson correspond à un récipient entourant au moins en partie les premier et deuxième conduits.

Selon un mode de réalisation, l'espace de cuisson est confondu au moins partiellement avec l'intérieur du deuxième conduit.

Selon un mode de réalisation, l'espace de cuisson se répartit entre l'intérieur du deuxième conduit et le récipient.

Selon un mode de réalisation, l'espace de cuisson est confondu avec l'intérieur du deuxième conduit.

Selon un mode de réalisation, le premier conduit est monté à rotation par rapport au deuxième conduit et entraîne la vis de gavage dont il est solidaire.

Selon un mode de réalisation, le pas de la vis varie selon la longueur de la vis.

Selon un mode de réalisation, la vis présente un agitateur disposé à l'extrémité de la vis.

Selon un mode de réalisation, la vis de gavage est guidée en rotation par au moins deux bras de centrage solidaires de l'agitateur.

Selon un mode de réalisation, l'agitateur est muni d'un déflecteur en vis-à-vis de la sortie du premier conduit.

Selon un mode de réalisation, l'agitateur présente un axe disposé à son extrémité.

Selon un mode de réalisation, l'agitateur est guidé en rotation par des paliers solidaires du récipient.

Selon un mode de réalisation, les conduits sont verticaux.

Selon un mode de réalisation, l'entrée du deuxième conduit présente une forme conique correspondant au moins partiellement à la vis de gavage.

Selon un mode de réalisation, le deuxième conduit est de forme et texture appropriées pour un broyage.

Selon un mode de réalisation, la vis de gavage est de forme et texture appropriées pour un broyage.

L'invention a encore pour objet un procédé de cuisson de gypse, comprenant les étapes de :
(i) fourniture de gaz chauds à l'entrée d'un premier conduit;
(ii) fourniture de gypse à l'entrée d'un deuxième conduit concentrique avec le premier conduit;
(iii) entraînement du gypse dans le deuxième conduit par une vis de gavage;
(iv) échange thermique indirect entre le gypse et les gaz chauds; et
(v) cuisson du gypse en plâtre.

Selon un mode de réalisation, le gypse est du désulfogypse et/ou du gypse naturel.

Selon un mode de réalisation, les étapes (iii) d'entraînement du gypse et (iv) d'échange thermique indirect comprennent le séchage du gypse.

Selon un mode de réalisation, les étapes (iii) d'entraînement du gypse et (iv) d'échange thermique indirect comprennent le séchage et au moins partiellement la cuisson (v) du gypse en plâtre.

Selon un mode de réalisation, la cuisson (v) comprend la mise en contact du gypse avec les gaz chauds, la cuisson étant du type flash.

Selon un mode de réalisation, la durée entre la mise en contact du gypse et sa cuisson totale est inférieure à 10 sec.

Selon un mode de réalisation, la cuisson (v) comprend la mise en contact du gypse avec les gaz chauds, la cuisson étant mise en oeuvre dans un lit fluidisé.

Selon un mode de réalisation, l'étape de cuisson comprend un transport du gypse depuis la sortie du deuxième conduit par entraînement par des gaz chauds.

Selon un mode de réalisation, le temps de séjour du gypse et/ou plâtre dans le deuxième conduit est compris entre 30 secondes et 5 minutes.

Selon un mode de réalisation, l'étape d'échange thermique indirect entre le gypse et les gaz chauds comprend l'étape de cuisson.

Selon un mode de réalisation, les étapes (iii) d'entraînement du gypse et (iv) d'échange thermique indirect comprennent le séchage et au moins partiellement la cuisson (v) du gypse en plâtre, la cuisson (v) étant complétée par la mise en contact du gypse avec les gaz chauds, la cuisson complétée étant du type flash, la durée des étapes (iii) et (iv) étant comprise entre 30 secondes et 5 minutes, la durée de la cuisson par contact avec les gaz chauds étant comprise entre 1 et 10 secondes.

Selon un autre mode de réalisation, la durée des étapes (iii) et (iv) étant comprise entre 1 et 2 minutes, la durée de la cuisson par contact avec les gaz chauds étant comprise entre 2 et 5 secondes.

Selon un mode de réalisation, le procédé selon l'invention comprend en outre une étape (iiib) de broyage du gypse pendant l'étape d'entraînement (iii).

Selon un mode de réalisation, le procédé est mis en oeuvre dans le sécheur/cuiseur selon l'invention.

L'invention a encore pour objet le plâtre susceptible d'être obtenu par le procédé selon l'invention. Ce plâtre présente en outre des caractéristiques spécifiques qui seront décrites ci-après.

D'autres caractéristiques et avantages de l'invention apparaîtront à la lecture de la description qui suit des modes de réalisation de l'invention donnés à titre d'exemple et en référence aux dessins qui montrent :
- la figure 1: une vue en coupe transversale d'une installation de séchage et de cuisson selon un premier mode de réalisation de l'invention ;
- la figure 2: une représentation schématique d'un exemple d'une vis utilisable dans l'installation de la figure 1.

L'invention propose de disposer une vis de gavage dans un conduit d'alimentation en gypse. Ce conduit est concentrique avec un autre conduit servant de chambre de combustion du brûleur et de conduit d'amenée de gaz chauds. Le conduit de gaz chaud peut donc être le conduit interne ou le conduit extérieur; la description qui suit est donnée pour le cas où le conduit de gaz chaud est le conduit interne mais l'invention s'applique mutatis mutandis au cas où le conduit de gaz chaud est le conduit extérieur.

Les gaz de combustion chauffent le gypse du conduit extérieur pour le sécher et éventuellement le déshydrater (i.e. le cuire) partiellement ou totalement.

Les gaz de combustion entrent ensuite en contact avec la matière pour effectuer totalement ou partiellement la cuisson.

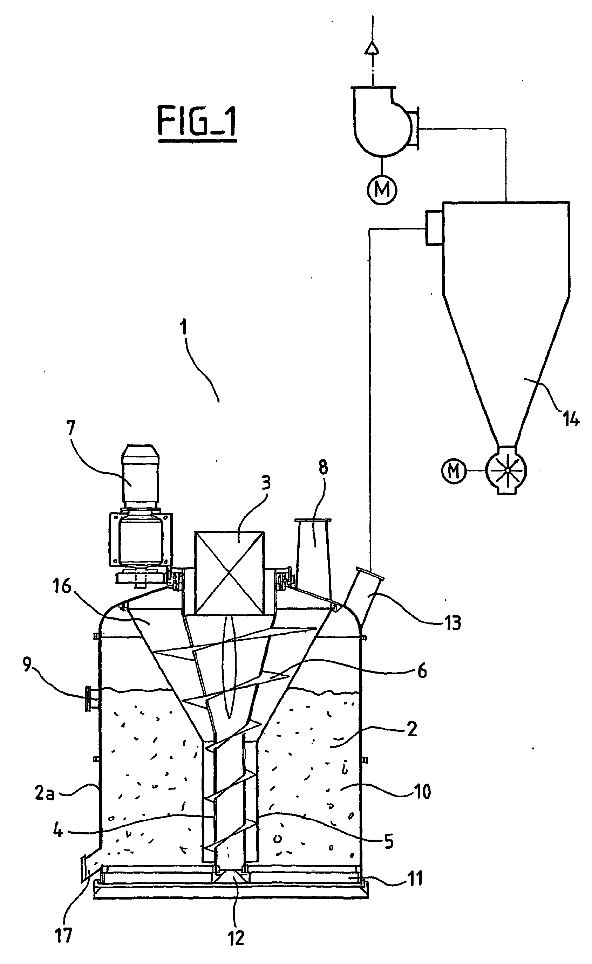

La figure 1 représente une vue en coupe transversale d'un sécheur/cuiseur 1 selon un premier mode de réalisation de l'invention. Ce sécheur/cuiseur présente un récipient 2a prévu pour contenir du sulfate de calcium dihydrate à cuire (ou à continuer de cuire).

Un brûleur 3 est disposé dans la partie supérieure du réacteur, la sortie du brûleur 3 étant placée dans un premier conduit 4 de transfert de gaz chauds. Le premier conduit 4 débouche approximativement au fond du récipient 2a. Un deuxième conduit 5 entoure le premier conduit 4. Une vis de gavage 6 est disposée entre les deux conduits 4 et 5. Cette vis 6 est entraînée en rotation par un moteur 7 en utilisant une transmission adéquate. La forme et les dimensions de cette vis sont ajustées et calculées précisément pour assurer un bon écoulement du gypse et un rendement thermique élevé. Une arrivée de sulfate de calcium dihydrate 8 débouche dans l'espace entre les conduits 4 et 5. Le sécheur/cuiseur est ainsi alimenté par une source de sulfate de calcium dihydrate. Des dispositifs adéquats sont positionnés pour assurer l'étanchéité du récipient avec l'extérieur.

On peut utiliser des brûleurs adéquats, par exemple à flamme plus ou moins longue, tels que décrits dans l'état de la technique. Le brûleur génère des gaz chauds utilisés à la fois pour sécher le gypse (évaporation de l'humidité ou eau libre contenue dans le gypse) et pour transformer le sulfate de calcium dihydrate du gypse séché en sulfate de calcium semi-hydrate ou plâtre, c'est-à-dire pour le cuire.

Les gaz chauds traversent un conduit 4, disposé de préférence verticalement dans le réacteur. Le conduit 4 s'étend du brûleur jusque sensiblement au bas du récipient. Les gaz chauds traversant le conduit sont ainsi introduits approximativement au niveau du fond du récipient 2a. On peut bien sûr introduire les gaz chauds à tout endroit approprié du réacteur pour cuire le sulfate de calcium dihydrate. On peut également prévoir d'utiliser un conduit incliné par rapport à la verticale du sécheur/cuiseur.

Le conduit extérieur 5 entoure le conduit intérieur 4, ces conduits étant disposés de préférence verticalement dans le récipient. Ce conduit extérieur 5, ainsi que la vis de gavage 6, permettent de guider le gypse depuis l'arrivée 8 jusque dans le récipient.

Le gypse traversant le conduit 5 absorbe de la chaleur des gaz traversant le conduit 4. Les échanges thermiques entre le gaz du conduit intérieur 4 et le gypse du conduit extérieur 5 permettent d'assurer l'évaporation de l'humidité libre du gypse avant qu'il n'entre en contact direct avec les gaz de combustion. La disposition concentrique du conduit extérieur 5 et du conduit intérieur 4 permet d'effectuer un échange de chaleur efficace entre le gypse et les gaz chauds. Des phénomènes de convection, rayonnement et surtout de conduction permettent cet échange de chaleur. La vis de gavage assure ce rôle en partie par le fait que de préférence elle est soudée sur le conduit 4 formant ainsi son axe et aussi par le dimensionnement des pales assurant une surface de contact importante avec le gypse.

L'humidité est évacuée par l'intermédiaire du conduit d'évacuation 13, disposé de préférence dans la partie supérieure du récipient, un espace étant aménagé à cet effet entre la partie supérieure du conduit 5 à la base de l'arrivée 8 et le conduit d'évacuation 13. Il est aussi possible de prévoir une conduite 13a (non représentée) située au niveau de cet espace aménagé, cette conduite 13a pouvant au besoin évacuer tout ou partie de la vapeur d'eau ou au contraire servir pour une injection supplémentaire de vapeur d'eau (ou de tout autre gaz si besoin est).

Ces échanges thermiques permettent non seulement de sécher le gypse mais éventuellement de commencer la réaction de conversion du dihydrate de calcium en semi-hydrate. Ainsi, le sécheur/cuiseur présente un espace de cuisson 2 de gypse qui est susceptible de débuter à l'intérieur même du conduit extérieur 5, pour s'étendre ensuite dans le récipient 2a et éventuellement dans les canalisations en sortie du réacteur.

La vis de gavage 6 est disposée entre les conduits 4 et 5. Cette vis est entraînée en rotation par le moteur 7, de préférence par l'intermédiaire du conduit 4 dont elle est solidaire. La vis permet d'alimenter le gypse dans le conduit extérieur 5. Cette vis s'étend d'une entrée de guidage de gypse 16 de la conduite extérieure 5 présentant une forme conique, dont la vis peut épouser la forme. La vis permet également d'éviter le colmatage du conduit 5 par le gypse, soit par effet d'entraînement, soit par raclage des pales de la vis à l'intérieur du conduit extérieur 5. La vis homogénéise également la matière fraîche par brassage de celle-ci. La différence de température entre la matière fraîche à proximité du conduit intérieur 4 et la matière fraîche à proximité du conduit extérieur 5 est ainsi réduite, ce qui améliore encore l'évaporation de l'humidité libre. Cela est avantageux lorsque la matière comprend du désulfogypse, ce produit présentant un taux d'humidité libre particulièrement important. La vitesse de rotation de la vis est réglée en fonction du débit choisi. La vapeur d'eau produite est évacuée par le haut du système. Le sécheur/cuiseur selon l'invention évite le colmatage de gypse en particulier du désulfogypse humide au cours des manutentions. Il est par ailleurs de préférence prévu un jeu entre la vis 6 et le conduit 5.

Au niveau de l'extrémité du conduit intérieur 4, les gaz de combustion rentrent en contact avec la matière. Du fait des échanges thermiques déjà mentionnés, la température des gaz de combustion est réduite lorsqu'ils atteignent l'extrémité du conduit 4 et rentrent en contact avec la matière. On peut ainsi cuire (ou terminer la cuisson) la matière sortant du conduit extérieur 5 avec une température de gaz adéquate, par exemple comprise entre 300 et 600° C. On évite ainsi la formation de dérivés non souhaités, tels que l'anhydrite II, lors de la cuisson.

Les dimensions caractéristiques du cuiseur selon l'invention sont par exemple (pour une capacité de 5t/h):
- Hauteur du réacteur : 2500 mm
- Diamètre du réacteur . 2100 mm
- Diamètre de la base inférieure du tube extérieur : 700 mm
- Diamètre de la base supérieure de tube extérieur : 1710 mm
- Diamètre du tube intérieur : 500 mm

Ces dimensions sont aussi compatibles avec un transport en container maritime, ce qui facilite le transport de l'unité, notamment sur de longues distances.

Selon une variante de sécheur/cuiseur, on peut prévoir que le conduit 5 entoure le conduit 4 sur une partie de sa longueur ou sur sa totalité.

La vis de gavage présente par exemple une longueur comprise entre 70% et 90% de la hauteur totale du réacteur. La vis présente une ou plusieurs pales s'étendant radialement en hélice. Dans l'exemple de la figure, la vis comprend une unique pale dont la longueur est sensiblement égale à la longueur du conduit intérieur 4. Lorsque le conduit 4 commence à un niveau supérieur (notamment lorsque la partie supérieure du conduit sert de chambre de combustion), la longueur de la vis peut n'être que partiellement celle dudit conduit 4 (par exemple 80%). De préférence la vis 6 a une longueur sensiblement égale à celle du conduit extérieur 5. Cette pale est de préférence réalisée en métal (par ex. inox) ou avec un matériau présentant une bonne conductivité thermique.

Avantageusement, la vis de gavage est solidaire du conduit intérieur 4 des gaz de combustion. On peut par exemple utiliser le conduit 4 comme arbre de transmission de la vis de gavage 6. La vis de gavage 6 peut également présenter un agitateur/centreur 11. Cet agitateur est par exemple fixé à l'extrémité inférieure du conduit 4 lorsque la vis est solidaire de celui-ci (mais celle-ci pourrait être solidaire du conduit 5, ou indépendante des deux conduits, etc.). Cet agitateur/centreur joue le rôle de centreur de la vis dans le conduit 5.

Dans cette variante, le conduit 4 est alors monté à rotation par rapport au récipient 2a. Cette variante permet ainsi d'obtenir une vis de gavage de fabrication simplifiée. La conduction thermique entre les gaz chauds et le gypse dans le conduit extérieur 5 est également améliorée par la vis.

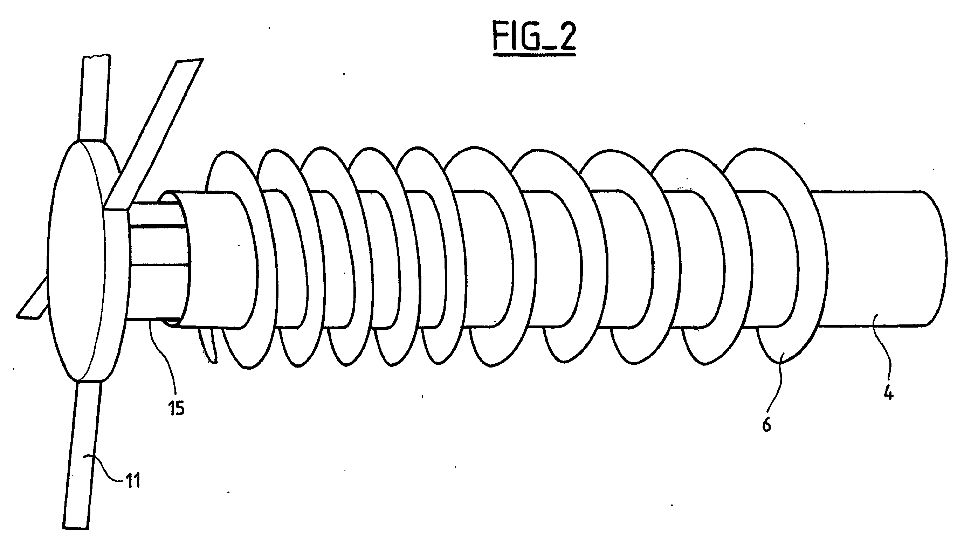

La figure 2 donne un exemple de réalisation de la vis de gavage 6. Un profilé, par exemple de section cruciforme 15, est présent pour transmettre le couple du conduit 4 à l'agitateur/centreur 11. Celui-ci peut comprendre éventuellement plusieurs pales remuant le cas échéant un lit éventuellement présent ou un dépôt de matière placé au fond du réacteur. L'agitateur permet, en fonction du type de cuisson mis en oeuvre dans le sécheur/cuiseur, d'homogénéiser la matière du lit et de répartir la matière provenant du conduit 5 dans le lit, ou d'évacuer d'éventuels dépôts en les renvoyant dans un flux de gaz de combustion. Cet agitateur permet aussi de faciliter la vidange du réacteur en cas de besoin (représentée par 17 sur la figure 1).

On peut encore prévoir que la vis de gavage 6 présente deux (ou plus) pales en hélices imbriquées.

On peut encore prévoir que la ou les pales présentent un pas vers la sortie des conduits qui est plus réduit que vers l'entrée d'alimentation, comme cela est représenté dans l'exemple de la figure 2. Un pas variable permet d'obtenir aisément un effet de bouchon à l'extrémité de la vis, les gaz chauds ne pouvant donc pas remonter dans la matière à l'intérieur du conduit 5.

On peut aussi prévoir une vis conique sur sensiblement sa longueur, auquel cas une variation du pas n'est pas requise. Il est aussi possible d'avoir une vis avec un pas constant, voire même augmentant le cas échéant.

L'agitateur/centreur 11 peut présenter un déflecteur (représenté sur la figure 1) 12 pour améliorer l'aéraulique. Ce déflecteur est placé en vis-à-vis de la sortie du conduit 4 de gaz chauds.

Selon une variante, les gaz éventuellement chargés évacués par la sortie 13 sont ensuite recyclés. Ils peuvent ainsi passer dans un séparateur cyclonique ou un filtre 14, qui sépare les poussières des gaz évacués. On peut également prévoir de recycler les gaz évacués par la sortie 9. Les gaz résiduels sont ensuite entraînés vers la chambre de combustion du brûleur augmentant ainsi le rendement thermique du sécheur/cuiseur.

En fonction du régime type de cuisson choisi, les particules de semi-hydrate (plâtre) peuvent être collectées en pied du cuiseur (dans le cas d'une vidange par la conduite 17), dans les gaz sortant par le conduit 13, ou par une sortie 9 latérale au niveau de la partie supérieure d'un lit 10 fluidisé éventuellement formé. La cuisson sera décrite plus en détails infra.

On peut distinguer en général trois modes de cuisson; la cuisson étant décrite plus en détails infra.

Selon le premier mode de fonctionnement, le gypse est intégralement cuit par contact direct avec les gaz de combustion, seul le séchage ayant lieu au niveau du contact indirect avec les gaz chauds au niveau de l'espace entre les conduits 4 et 5. L'espace de cuisson 2 de gypse s'étend alors de la sortie de l'espace situé entre les conduits 4 et 5 et comprend le récipient 2a (ici confondu avec le réacteur). De préférence en sortie du conduit 5 s'opère une cuisson dite "flash". On peut aussi opérer une cuisson classique dans un lit, comme dans l'art antérieur cité ci-dessus. En fonction des températures des gaz en sortie, la cuisson peut éventuellement se terminer après la sortie du récipient 2a, notamment dans les conduits jusqu'au filtre, tant que la température est suffisamment élevée. Il peut s'opérer éventuellement ce qui est appelé une post-cuisson. (interaction entre des gaz chauds et humides et la matière en cours de refroidissement). On a aussi constaté de façon générale, que plus le temps de cuisson était court, plus le sulfate de calcium semi-hydrate ou plâtre obtenu était réactif. On a constaté en pratique que la réactivité du semi-hydrate obtenu augmentait avec sa vitesse de cuisson. Il est donc particulièrement avantageux de réaliser la cuisson immédiatement après le séchage sous forme de cuisson flash.

Selon un deuxième mode de fonctionnement, la cuisson est effectuée en partie déjà dans le conduit 5, et la cuisson se poursuit dans le récipient 2a. La zone de cuisson 2 comprend alors une partie de l'espace situé entre les conduits 4 et 5 et le récipient 2a. Comme pour le premier mode de fonctionnement, la cuisson peut éventuellement se terminer après la sortie du récipient 2a et de même une cuisson flash est aussi préférée.

En général, la cuisson s'effectue selon le second mode. La cuisson en sortie du conduit 5 est en général comprise entre 20 et 70%, de préférence 30 à 60%, avantageusement environ 50%.

Ce second mode de fonctionnement est par exemple obtenu avec les temps de transfert suivants de la matière: un cycle de transfert ou de séchage dans le conduit extérieur 5 compris entre 30 secondes et 5 minutes, de préférence entre 1 et 2 minutes ; un cycle de cuisson par contact de la matière et des gaz de combustion compris entre 1 et 10 secondes, de préférence entre 2 et 5 secondes.

Ce second mode de fonctionnement est par exemple obtenu en utilisant le cuiseur décrit plus haut, avec une vis tournant à une vitesse comprise entre 2 et 12 tours/minute, un gypse de synthèse d'une granulométrie de 50µm tel que du désulfogypse, et une puissance calorifique de 1.5 à 2.0 MW.

Selon un troisième mode de fonctionnement du sécheur/cuiseur, l'espace de cuisson est confondu avec l'espace situé entre les conduits 4 et 5 (i.e. l'intérieur du conduit extérieur 5). On cuit dans ce cas l'intégralité du gypse avant sa sortie du conduit extérieur 5. Dans ce cas, aucun récipient 2a n'est requis et celui-ci peut être omis.

La distinction entre les trois modes de fonctionnement s'opère par plusieurs facteurs, liés au dispositif lui-même, aux conditions opératoires (puissance thermique et débit) et aux caractéristiques du gypse.

Quand on traite du gypse synthétique, celui-ci présente une granulométrie très fine (quelques dizaines de microns de diamètre moyen). Il sera en général possible de sécher et de partiellement déshydrater dans l'espace entre les 2 tubes (second mode de fonctionnement). Le taux de déshydratation est variable en fonction du débit de gypse et de la puissance du brûleur. En sortie de conduit, le complément de cuisson se fait de préférence de façon "flash" en quelques secondes (2 à 10 sec. par exemple). La matière est alors entraînée dans le flux des gaz de combustion jusqu'au filtre où elle est récupérée.

Quand on traite un gypse naturel broyé, celui-ci présente une granulométrie relativement fine (jusqu'à quelques centaines de microns de diamètre moyen). Il sera en général possible de sécher au niveau de la vis de gavage, ce type de gypse (naturel) ne présentant pas une humidité élevée. Le taux de cuisson en sortie de la vis est aussi variable. Dans le cas d'un taux faible, des conditions aérauliques seront choisies (voir infra) de façon à former un lit fluidisé 10, l'évacuation du plâtre se faisant par la sortie supérieure 9. Dans le cas d'un taux élevé, des conditions aérauliques seront choisies (voir infra) de façon à ne former un lit fluidisé 10 que sur une hauteur très faible, l'évacuation du plâtre se faisant par une sortie inférieure qui se confond presque avec la sortie de vidange 17. Dans ce cas il n'y a pas de cuisson flash, le temps de séjour de la matière dans le lit étant supérieur à quelques dizaines de secondes. La position de la sortie dépend du taux de cuisson en sortie de vis.

Dans le cas du gypse naturel, il est possible de prévoir un mode de réalisation avantageux. Selon ce mode de réalisation, le dispositif selon l'invention assure une fonction de broyage à partir d'un gypse naturel concassé (ayant un diamètre de particules typiquement de 3 mm). Selon ce mode de réalisation, le deuxième conduit et/ou la vis de gavage est(sont) de forme et texture appropriées pour un broyage. Il est possible en effet de choisir des surfaces abrasive et de régler les jeu entre les pièces de sorte à obtenir des conditions d'attrition, permettant ainsi de broyer le gypse naturel concassé en des particules ayant un diamètre par exemple entre 50 et 500 µm. En général, dans le dispositif, la fonction broyage est assurée après la fonction séchage.

Les conditions (aérauliques, thermiques et autres) régnant dans le récipient 2a sont notamment fonction de la dimension particulaire du gypse séché et plus ou moins déshydraté sortant du conduit 5 et de la vitesse des gaz (en fût vide) dans le récipient. Des abaques sont connus pour donner, à une température et un taux d'humidité donnés dans quel régime de transport la matière va se trouver.

Il y a deux cas de figure. Dans le premier cas les particules sont entraînées par les gaz chauds. Il se produit le phénomène de transport des solides par des gaz. Dans ce cas, le plâtre est récupéré après séparation des gaz par exemple dans le séparateur cyclonique 14 (on peut utiliser tout autre type de séparateur couramment utilisé). Dans un tel cas, on peut régler la puissance calorifique du brûleur et le débit des gaz chauds ainsi produits pour que se produise une cuisson flash pendant un temps court. Ce mode de réalisation est préféré, notamment pour obtenir un plâtre qui servira à la fabrication des plaques de plâtre. Dans le second cas les particules sédimentent et forment alors un lit fluidisé. Dans un tel cas, le plâtre peut être évacué dans le récipient 2a à un niveau plus ou moins élevé par la sortie 9 qui peut dans des conditions extrêmes se confondre avec la sortie de vidange 17.

Dans le cas de la cuisson flash, le récipient 2a sert principalement de canalisation de guidage du semi-hydrate obtenu. Le récipient peut alors avoir toute forme appropriée, et pas nécessairement cylindrique comme cela était le cas pour les cuiseurs de l'art antérieur. Dans le cas de la cuisson avec un lit de matière, le récipient 2a remplit sa fonction classique.

Le procédé selon l'invention offre encore plusieurs avantages par rapport à l'art antérieur. C'est un procédé continu et très stable (la qualité du plâtre produit est constante). Les équilibres thermiques et aérauliques sont très rapidement obtenus (typiquement en moins de 15 minutes), ce qui conduit à une simplicité de conduite. Enfin, le dispositif mettant en oeuvre le procédé selon l'invention est compact et simple, ce qui offre des coûts d'investissement réduits.

Il est possible d'obtenir dans l'invention (notamment avec un mode de cuisson mettant en oeuvre une cuisson flash) un plâtre ayant les propriétés suivantes.

Ce plâtre est particulièrement bien adapté à la fabrication de plaques de plâtre, de carreaux de plâtre, de plâtres dits industriels, d'enduits.

Le plâtre selon l'invention présente des caractéristiques très spécifiques, par rapport à des plâtres connus dans l'art antérieur. Ces caractéristiques sont les suivantes:
(i) Le plâtre très réactif, avec une très grande vitesse de prise.
(ii) La demande en eau de ce plâtre est faible.
(iii) La fluidité du plâtre est excellente.

La vitesse de prise se mesure de diverses façons.

Selon une première variante, le début de prise Gillmore est compris entre 4,5 et 6 min. On applique la norme ASTM C266 pour cette mesure.

Selon une seconde variante, la fin de prise Vicat est comprise entre 10 et 12 min. On applique la norme ASTM C472 pour cette mesure.

Selon une troisième variante, qui est préférée, le début de prise couteau est inférieur à 6 minutes, de préférence inférieur à 5 minutes. On applique la norme NF B 12-401 ou ISO DIN 3050 (Anneau de Smidth : diamètre intérieur 60mm, hauteur 50mm) pour la détermination. Dans la mesure où il s'agit d'un plâtre rapide, le processus est modifié en conformité avec les prescriptions pour les plâtres rapides comme suit: Après saupoudrage du plâtre dans l'eau pendant 15 sec., et une attente de 30 sec. pour imbibition de la poudre, on agite pendant 30 sec. avant remplissage de l'anneau de Smidth et on soulte l'anneau à 1min.15sec pour la mesure de la prise couteau.

La demande en eau est liée notamment au taux de gâchage à saturation. Il est supérieur à 140 parties de plâtre pour 100 parties d'eau. On applique la norme NF B 12-401 ou ISO DIN 3050 pour la détermination A titre de comparaison un plâtre classique a un taux de gâchage à saturation de l'ordre de 125 parties de plâtre pour 100 parties d'eau.

La fluidité est excellente (ce qui est aussi liée à la demande en eau). Elle se mesure par l'étalement, pour un taux de gâchage de 0.75, d'au moins 205 mm, de préférence au moins 240 mm. Ces valeurs sont, de façon surprenante, assez élevées, lorsque le plâtre est obtenu par une cuisson flash. En effet, les plâtres de cuisson flash selon l'art antérieur sont caractérisés par une fluidité très moyenne, ce qui nécessite beaucoup d'adjuvants. On applique la norme NF B 12-401 ou ISO DIN 3050 (Anneau de Smidth : diamètre intérieur 60mm, hauteur 50mm). Après saupoudrage du plâtre dans l'eau pendant 15 sec., et une attente de 30 sec. pour imbibition de la poudre, on agite pendant 30 sec. avant remplissage de l'anneau de Smidth et on soulève l'anneau à 1min.15sec pour la mesure de l'étalement.

Le plâtre selon l'invention n'éclate pas dans l'eau. La surface BET (Norme NF X 11-621)du plâtre selon l'invention est en général supérieure à 8 m²/g. Une telle valeur ne correspond pas aux caractéristiques habituelles d'un plâtre qui n'éclate pas dans l'eau (par exemple un plâtre vieilli présente une surface BET inférieure à 4m²/g généralement et n'éclate pas dans l'eau). Pour la détermination de l'éclatement dans l'eau, on pourra se reporter à la publication "Eclatement des grains de plâtre au contact de l'eau", Jean-Claude Weiler, in Ciments, Bétons, Plâtres, Chaux, No. 774, 5/88. Le pouvoir d'éclatement du plâtre selon l'invention, en reprenant la définition donnée dans cette publication est typiquement inférieur à 5%.

Les caractéristiques du plâtre selon l'invention permettent d'obtenir des propriétés intéressantes.

Le temps de prise faible permet d'éviter l'ajout d'accélérateur de prise, tel que du gypse (qui peut être du gypse résiduel de cuisson ou du gypse cru ajouté). Ainsi, le plâtre selon l'invention est exempt de gypse (typiquement la teneur en gypse est inférieure à 0.4, voire 0.2% en poids).

La demande en eau faible (taux de gâchage à saturation et fluidité) permet d'ajouter moins d'eau pour la fabrication de la pâte de plâtre pour une consistance donnée. Ceci est avantageux, puisqu'il est nécessaire, dans une installation de plaques de plâtre, ou de carreaux par exemple de sécher l'excès d'eau de gâchage. On obtient ainsi des gains en investissement et en consommation énergétique. La demande en eau faible permet aussi d'obtenir des produits finaux (plâtres industriels ou plaque de plâtre) qui sont très durs et/ou avec une résistance mécanique élevée.

On a mis en oeuvre le procédé selon l'invention et on a obtenu, pour des paramètres entrant dans les intervalles spécifiés, des plâtres dont les caractéristiques sont les suivantes. L'exemple 4 est un plâtre classique.

| Ex | D50 | Début Prise Couteau | Etalement (mm) | Eclatement (% à 50µm) | BET m²/g | Taux de gâchage à saturation |
|---|---|---|---|---|---|---|
| 1 | 35µm | 4min 15sec | 242 | 0% | 9,5 | 161 |
| 2 | 40µm | 5min 15sec | 258 | 0% | 10,1 | 160 |
| 3 | 40µm | 5min 15sec | 241 | 1% | 10,2 | 170 |
| 4 | 35µm | 10-20min | 195 | 65% | 10,8 | 125 |

Bien entendu, la présente invention n'est pas limitée aux exemples et modes de réalisation décrits et représentés, mais elle est susceptible de nombreuses variantes accessibles à l'homme de l'art. Ainsi, bien qu'on ait décrit auparavant un conduit 5 d'alimentation en sulfate de calcium dihydrate frais entourant le conduit d'alimentation en gaz chauds 4, on peut également prévoir dans le cadre de l'invention que le conduit d'alimentation en gaz chauds 4 entoure le conduit 5 d'alimentation en sulfate de calcium dihydrate frais. L'invention trouvera aussi à s'appliquer de façon générale à tout produit pulvérulent qui doit être séché et/ou cuit.

## Revendications

1. Sécheur/cuiseur (1) de gypse comprenant :
- un espace de cuisson (2);
- un premier conduit (4) présentant une entrée raccordée à une source de gaz chauds (3), et une sortie débouchant dans l'espace de cuisson (2);
- un deuxième conduit (5) présentant une entrée raccordée à une source de gypse (8) et une sortie débouchant dans l'espace de cuisson, le deuxième conduit étant concentrique avec le premier conduit;
- une vis de gavage (6) disposée au moins partiellement dans le deuxième conduit, ladite vis entraînant le gypse dans l'espace de cuisson.

2. Le sécheur/cuiseur selon la revendication 1, **caractérisé en ce que** le deuxième conduit entoure le premier conduit sur une partie de sa longueur.

3. Le sécheur/cuiseur selon la revendication 1, **caractérisé en ce que** le deuxième conduit entoure le premier conduit sur sensiblement sa longueur.

4. Le sécheur/cuiseur selon l'une des revendications 1 à 3, **caractérisé en ce que** l'espace de cuisson (2) correspond à un récipient (2a) entourant au moins en partie les premier (4) et deuxième (5) conduits.

5. Le sécheur/cuiseur selon l'une des revendications 1 à 4, **caractérisé en ce que** l'espace de cuisson (2) est confondu au moins partiellement avec l'intérieur du deuxième conduit (5).

6. Le sécheur/cuiseur selon les revendications 4 et 5, **caractérisé en ce que** l'espace de cuisson se répartit entre l'intérieur du deuxième conduit (5) et le récipient (2a).

7. Le sécheur/cuiseur selon la revendication 5, **caractérisé en ce que** l'espace de cuisson est confondu avec l'intérieur du deuxième conduit (5).

8. Le sécheur/cuiseur selon l'une des revendications précédentes, **caractérisé en ce que** le premier conduit (4) est monté à rotation par rapport au deuxième conduit (5) et entraîne la vis de gavage (6) dont il est solidaire.

9. Le sécheur/cuiseur selon l'une des revendications précédentes, **caractérisé en ce que** le pas de la vis varie selon la longueur de la vis.

10. Le sécheur/cuiseur selon l'une des revendications précédentes, **caractérisé en ce que** la vis présente un agitateur (11) disposé à l'extrémité de la vis.

11. Le sécheur/cuiseur selon la revendication 10, **caractérisé en ce que** la vis de gavage est guidée en rotation par au moins deux bras de centrage solidaires de l'agitateur 11.

12. Le sécheur/cuiseur selon la revendication 10 ou 11, **caractérisé en ce que** l'agitateur 11 est muni d'un déflecteur (12) en vis-à-vis de la sortie du premier conduit (4).

13. Le sécheur/cuiseur selon l'une des revendications 10 à 12, **caractérisé en ce que** l'agitateur 11 présente un axe disposé à son extrémité.

14. Le sécheur/cuiseur selon l'une des revendications 10 à 13, **caractérisé en ce que** l'agitateur 11 est guidé en rotation par des paliers solidaires du récipient (2a).

15. Le sécheur/cuiseur selon l'une des revendications précédentes, **caractérisé en ce que** les conduits (4, 5) sont verticaux.

16. Le sécheur/cuiseur selon l'une des revendications précédentes, **caractérisé en ce que** l'entrée du deuxième conduit présente une forme conique correspondant au moins partiellement à la vis de gavage.

17. Le sécheur/cuiseur selon l'une des revendications précédentes, **caractérisé en ce que** le deuxième conduit (5) est de forme et texture appropriées pour un broyage.

18. Le sécheur/cuiseur selon l'une des revendications précédentes, **caractérisé en ce que** la vis de gavage (6) est de forme et texture appropriées pour un broyage.

19. Procédé de cuisson de gypse, comprenant les étapes de :
(i) fourniture de gaz chauds à l'entrée d'un premier conduit;
(ii) fourniture de gypse à l'entrée d'un deuxième conduit concentrique avec le premier conduit;
(iii) entraînement du gypse dans le deuxième conduit par une vis de gavage;
(iv) échange thermique indirect entre le gypse et les gaz chauds; et
(v) cuisson du gypse en plâtre.

20. Le procédé selon la revendication 19, **caractérisé en ce que** le gypse est du désulfogypse et/ou du gypse naturel.

21. Le procédé selon la revendication 19 ou 20, **caractérisé en ce que** les étapes (iii) d'entraînement du gypse et (iv) d'échange thermique indirect comprennent le séchage du gypse.

22. Le procédé selon l'une des revendications 19 à 21, **caractérisé en ce que** les étapes (iii) d'entraînement du gypse et (iv) d'échange thermique indirect comprennent le séchage et au moins partiellement la cuisson (v) du gypse en plâtre.

23. Le procédé selon l'une des revendications 19 à 22, **caractérisé en ce que** la cuisson (v) comprend la mise en contact du gypse avec les gaz chauds, la cuisson étant du type flash.

24. Le procédé selon la revendication 23, **caractérisé en ce que** la durée entre la mise en contact du gypse et sa cuisson totale est inférieure à 10 sec.

25. Le procédé selon l'une des revendications 19 à 22, **caractérisé en ce que** la cuisson (v) comprend la mise en contact du gypse avec les gaz chauds, la cuisson étant mise en oeuvre dans un lit fluidisé.

26. Le procédé selon l'une des revendications 19 à 25, **caractérisé en ce que** l'étape de cuisson comprend un transport du gypse depuis la sortie du deuxième conduit par entraînement par des gaz chauds.

27. Le procédé selon l'une des revendications 19 à 26, **caractérisé en ce que** le temps de séjour du gypse et/ou plâtre dans le deuxième conduit est compris entre 30 secondes et 5 minutes.

28. Le procédé selon l'une des revendications 19 à 22, **caractérisé en ce que** l'étape d'échange thermique indirect entre le gypse et les gaz chauds comprend l'étape de cuisson.

29. Le procédé selon l'une des revendications 19 à 22, **caractérisé en ce que** les étapes (iii) d'entraînement du gypse et (iv) d'échange thermique indirect comprennent le séchage et au moins partiellement la cuisson (v) du gypse en plâtre, la cuisson (v) étant complétée par la mise en contact du gypse avec les gaz chauds, la cuisson complétée étant du type flash, la durée des étapes (iii) et (iv) étant comprise entre 30 secondes et 5 minutes, la durée de la cuisson par contact avec les gaz chauds étant comprise entre 1 et 10 secondes.

30. Le procédé selon la revendication 29, la durée des étapes (iii) et (iv) étant comprise entre 1 et 2 minutes, la durée de la cuisson par contact avec les gaz chauds étant comprise entre 2 et 5 secondes.

31. Le procédé selon l'une des revendications 19 à 30, **caractérisé en ce qu'**il comprend en outre une étape (iiib) de broyage du gypse pendant l'étape d'entraînement (iii).

32. Le procédé selon l'une des revendications 19 à 31, mis en oeuvre dans le sécheur/cuiseur selon l'une des revendications 1 à 18.

33. Plâtre susceptible d'être obtenu par le procédé de l'une des revendications 19 à 32.

34. Plâtre selon la revendication 33, dont les caractéristiques sont les suivantes:
(i) réactivité:
(a) début de prise Couteau inférieur à 6 minutes, de préférence inférieur à 5 minutes; et/ou
(b) prise Gillmore comprise entre 4,5 et 6 min; et/ou
(c) fin de prise Vicat comprise entre 10 et 12 min; et
(ii) taux de gâchage à saturation d'au moins 140 parties de plâtre pour 100 parties d'eau; et
(iii) fluidité telle que déterminée par une valeur d'étalement supérieure à 205, de préférence supérieure à 240mm.

35. Plâtre selon la revendication 34, dont les caractéristiques sont les suivantes:
(i) réactivité: début de prise Couteau inférieur à 5 minutes; et
(ii) taux de gâchage à saturation d'au moins 140 parties de plâtre pour 100 parties d'eau; et
(iii) fluidité telle que déterminée par une valeur d'étalement supérieure à 240mm.

36. Plâtre selon la revendication 34 ou 35, dont la surface BET est d'au moins 8 m²/g.

37. Plâtre selon l'une des revendications 34 à 36, qui n'éclate pas dans l'eau.

38. Plâtre selon l'une des revendications 34 à 37, exempt de gypse et/ou d'adjuvant chloré.

## Claims

1. A dryer/calciner (1) of gypsum comprising:
- a calcining space (2)
- a first pipe (4) with an inlet connected to a source of hot gases (3), and an outlet emerging in the calcining space (2);
- a second pipe (5) with an inlet connected to a source of gypsum (8) and an outlet emerging in the calcining space, the second pipe being concentric with the first pipe;
- a force-feeding screw (6) positioned at least partially in the second pipe, the said screw entraining the gypsum in the calcining space.

2. The dryer/calciner according to claim 1, **characterised in that** the second pipe surrounds the first pipe over a portion of its length.

3. The dryer/calciner according to claim 1, **characterised in that** the second pipe surrounds the first pipe substantially over its length.

4. The dryer/calciner according to one of claims 1 to 3, **characterised in that** the calcining space (2) corresponds to a receptacle (2a) surrounding at least partially the first (4) and second (5) pipes.

5. The dryer/calciner according to one of claims 1 to 4, **characterised in that** the calcining space (2) is at least partially coincident with the inside of the second pipe(5).

6. The dryer/calciner according to claims 4 and 5, **characterised in that** the calcining space is divided up between the inside of the second pipe (5) and the receptacle (2a).

7. The dryer/calciner according to claim 5, **characterised in that** the calcining space is coincident with the inside of the second pipe (5).

8. The dryer/calciner according to one of the previous claims, **characterised in that** the first pipe 4) is assembled in rotation with respect to the second pipe (5) and drives the force-feeding screw (6) with which it is integral.

9. The dryer/calciner according to one of the previous claims, **characterised in that** the pitch of the screw varies depending on the length of the screw.

10. The dryer/calciner according to one of the previous claims, **characterised in that** the screw has a stirrer (11) positioned at the end of the screw.

11. The dryer/calciner according to claim 10, **characterised in that** the force-feeding screw is guided in rotation by at least two centering arms integral with the stirrer 11.

12. The dryer/calciner according to claims 10 or 11, **characterised in that** the stirrer 11 is equipped with a deflector (12) facing the outlet of the first pipe (4).

13. The dryer/calciner according to one of claims 10 to 12, **characterised in that** the stirrer 11 has a shaft positioned at its end.

14. The dryer/calciner according to one of claims 10 to 13, **characterised in that** the stirrer 11 is guided in rotation by bearings integral with the receptacle (2a).

15. The dryer/calciner according to one of the previous claims, **characterised in that** the pipes (4,5) are vertical.

16. The dryer/calciner according to one of the previous claims, **characterised in that** the inlet of the second pipe has a conical shape corresponding at least partially to the force-feeding screw.

17. The dryer/calciner according to one of the previous claims, **characterised in that** the second pipe (5) has a shape and texture appropriate for milling.

18. The dryer/calciner according to one of the previous claims, **characterised in that** the force-feeding screw (6) has a shape and texture appropriate for milling.

19. A process for the calcining of gypsum comprising the stages of:
(i) supplying hot gases to the inlet of a first pipe;
(ii) supplying gypsum to the inlet of a second pipe concentric with the first pipe;
(iii) entraining the gypsum in the second pipe by a force-feeding screw;
(iv) exchanging indirect heat between the gypsum and the hot gases; and
(v) calcining the gypsum to plaster.

20. The process according to claim 19, **characterised in that** the gypsum is desulfurized gypsum or natural gypsum.

21. The process according to claim 19 or 20, **characterised in that** the stages (iii) of entraining the gypsum and (iv) exchanging indirect heat comprise the drying of the gypsum.

22. The process according to one of claims 19 to 21, **characterised in that** the stages (iii) of entraining the gypsum and (iv) exchanging indirect heat comprise drying and at least partially calcining (v) the gypsum to plaster.

23. The process according to one of claims 19 to 22, **characterised in that** the calcining (v) comprises putting the gypsum in contact with the hot gases, the calcining being of the flash type.

24. The process according to claim 23, **characterised in that** the time between putting the gypsum in contact with the hot gases and its complete calcining is less than 10 sec.

25. The process according to one of claims 19 to 22, **characterised in that** the calcining (v) comprises putting the gypsum in contact with the hot gases, the calcining being done in a fluidized bed.

26. The process according to one of claims 19 to 25, **characterised in that** the calcining stage comprises transport of the gypsum from the outlet of the second pipe by entrainment by the hot gases.

27. The process according to one of claims 19 to 26, **characterised in that** the residence time of the gypsum and/or plaster in the second pipe is from 30 seconds to 5 minutes.

28. The process according to one of claims 19 to 22, **characterised in that** the stage of indirect heat exchange between the gypsum and the hot gases comprises the calcining stage.

29. The process according to one of claims 19 to 22, **characterised in that** the stages (iii) of entraining the gypsum and (iv) exchanging indirect heat comprise drying and at least partially calcining (v) the gypsum to plaster, the calcining (v) being completed by putting in contact the gypsum with the hot gases, the completed calcining being of the flash type, the duration of the stages (iii) and (iv) being from 30 seconds to 5 minutes, the duration of the calcining by contact with the hot gases being from 1 to 10 seconds.

30. The process according to claim 29, the duration of the stages (iii) and (iv) being from 1 to 2 minutes, the duration of the calcining by contact with the hot gases being from 2 to 5 seconds.

31. The process according to one of claims 19 to 30, **characterised in that** it further comprises a stage (iiib) of milling the gypsum during the entrainment stage (iii).

32. The process according to one of claims 19 to 31, implementation in the dryer/calciner according to one of claims 1 to 18.

33. A plaster obtainable by the process of one of claims 19 to 32.

34. The plaster according to claim 33 with the following characteristics:
(i) reactivity:
(a) Knife initial setting less than 6 minutes, preferably less than 5 minutes; and/or
(b) Gillmore setting comprised from 4.5 to 6 min. and/or
(c) Vicat final setting comprised from 10 to 12 min; and
(ii) plaster/water mixing ratio at saturation of at least 140 parts of plaster for 100 of water; and
(iii) fluidity as determined by a spread value greater than 205, preferably greater than 240mm.

35. The plaster according to claim 34, with the following characteristics:
(i) reactivity: Knife initial setting less than 5 minutes; and
(ii) plaster/water mixture ratio at saturation of at least 140 parts of plaster for 100 of water; and
(iii) fluidity as determined by a spread value greater than 240mm.

36. The plaster according to claim 34 or 35, having a BET surface area that is at least 8m²/g.

37. The plaster according to one of claims 34 to 36, which does not split in water.

38. The plaster according to one of claims 34 to 37, which is devoid of gypsum and/or a chlorinated admixture.

## Patentansprüche

1. Vorrichtung (1) zum Trocknen/Brennen von Gips, umfassend:
- einen Brennraum (2);
- eine erste Leitung (4) mit einem an eine Heißgasquelle (3) angeschlossenen Einlass und einem in den Brennraum (2) mündenden Auslass;
- eine zweite Leitung (5) mit einem an eine Gipsquelle (8) angeschlossenen Einlass und einem in den Brennraum mündenden Auslass, wobei die zweite Leitung zu der ersten Leitung konzentrisch ist;
- eine Förderschnecke (6), die mindestens teilweise in der zweiten Leitung angeordnet ist und den Gips in den Brennraum mitnimmt.

2. Vorrichtung zum Trocknen/Brennen nach Anspruch 1, **dadurch gekennzeichnet, dass** die zweite Leitung die erste Leitung auf einem Teil ihrer Länge umgibt.

3. Vorrichtung zum Trocknen/Brennen nach Anspruch 1, **dadurch gekennzeichnet, dass** die zweite Leitung die erste Leitung im Wesentlichen auf ihrer Länge umgibt.

4. Vorrichtung zum Trocknen/Brennen nach einem der Ansprüche 1 bis 3, **dadurch gekennzeichnet, dass** der Brennraum (2) einem Behälter (2a) entspricht, der mindestens zum Teil die erste Leitung (4) und die zweite Leitung (5) umgibt.

5. Vorrichtung zum Trocknen/Brennen nach einem der Ansprüche 1 bis 4, **dadurch gekennzeichnet, dass** der Brennraum (2) mindestens teilweise mit dem Inneren der zweiten Leitung (5) zusammenfällt.

6. Vorrichtung zum Trocknen/Brennen nach den Ansprüchen 4 und 5, **dadurch gekennzeichnet, dass** der Brennraum auf das Innere der zweiten Leitung (5) und auf den Behälter (2a) aufgeteilt ist.

7. Vorrichtung zum Trocknen/Brennen nach Anspruch 5, **dadurch gekennzeichnet, dass** der Brennraum mit dem Inneren der zweiten Leitung (5) zusammenfällt.

8. Vorrichtung zum Trocknen/Brennen nach einem der vorhergehenden Ansprüche, **dadurch gekennzeichnet, dass** die erste Leitung (4) bezüglich der zweiten Leitung (5) drehbar montiert ist und die Förderschnecke (6) mitnimmt, mit der sie fest verbunden ist.

9. Vorrichtung zum Trocknen/Brennen nach einem der vorhergehenden Ansprüche, **dadurch gekennzeichnet, dass** die Steigung der Schnecke sich auf der Länge der Schnecke ändert.

10. Vorrichtung zum Trocknen/Brennen nach einem der vorhergehenden Ansprüche, **dadurch gekennzeichnet, dass** die Schnecke einen Rührer (11) aufweist, der am Ende der Schnecke angeordnet ist.

11. Vorrichtung zum Trocknen/Brennen nach Anspruch 10, **dadurch gekennzeichnet, dass** die Förderschnecke in ihrer Drehung durch mindestens zwei mit dem Rührer (11) fest verbundene Zentrierungsarme geführt ist.

12. Vorrichtung zum Trocknen/Brennen nach Anspruch 10 oder 11, **dadurch gekennzeichnet, dass** der Rührer (11) mit einem Ablenkorgan (12) gegenüber dem Auslass der ersten Leitung (4) versehen ist.

13. Vorrichtung zum Trocknen/Brennen nach einem der Ansprüche 10 bis 12, **dadurch gekennzeichnet, dass** der Rührer (11) eine an seinem Ende angeordnete Achse aufweist.

14. Vorrichtung zum Trocknen/Brennen nach einem der Ansprüche 10 bis 13, **dadurch gekennzeichnet, dass** der Rührer (11) in seiner Drehung durch mit dem Behälter (2a) fest verbundene Lager geführt ist.

15. Vorrichtung zum Trocknen/Brennen nach einem der vorhergehenden Ansprüche, **dadurch gekennzeichnet, dass** die Leitungen (4, 5) vertikal sind.

16. Vorrichtung zum Trocknen/Brennen nach einem der vorhergehenden Ansprüche, **dadurch gekennzeichnet, dass** der Einlass der zweiten Leitung eine konische Form aufweist, die mindestens teilweise der Förderschnecke entspricht.

17. Vorrichtung zum Trocknen/Brennen nach einem der vorhergehenden Ansprüche, **dadurch gekennzeichnet, dass** die zweite Leitung (5) eine Form und eine Textur aufweist, die für eine Mahlung geeignet sind.

18. Vorrichtung zum Trocknen/Brennen nach einem der vorhergehenden Ansprüche, **dadurch gekennzeichnet, dass** die Förderschnecke (6) eine Form und eine Textur aufweist, die für eine Mahlung geeignet sind.

19. Verfahren zum Brennen von Gips, umfassend die Schritte:
(i) Liefern von Heißgasen am Einlass einer ersten Leitung;
(ii) Liefern von Gips am Einlass einer zweiten Leitung, die zur ersten Leitung konzentrisch ist;
(iii) Mitnahme des Gipses in der zweiten Leitung durch eine Förderschnecke;
(iv) indirekter Wärmeaustausch zwischen dem Gips und den Heißgasen; und
(v) Brennen des Gipses zu Bassanit.

20. Verfahren nach Anspruch 19, **dadurch gekennzeichnet, dass** der Gips Entschwefelungsgips und/oder Naturgips ist.

21. Verfahren nach Anspruch 19 oder 20, **dadurch gekennzeichnet, dass** die Schritte (iii) der Mitnahme des Gipses und (iv) des indirekten Wärmeaustausches das Trocknen des Gipses umfassen.

22. Verfahren nach einem der Ansprüche 19 bis 21, **dadurch gekennzeichnet, dass** die Schritte (iii) der Mitnahme des Gipses und (iv) des indirekten Wärmeaustausches das Trocknen und mindestens teilweise das Brennen (v) von Gips zu Bassanit umfassen.

23. Verfahren nach einem der Ansprüche 19 bis 22, **dadurch gekennzeichnet, dass** das Brennen (v) das Inkontaktbringen des Gipses mit den Heißgasen umfasst, wobei es sich bei dem Brennen um einen Flash-Brand handelt.

24. Verfahren nach Anspruch 23, **dadurch gekennzeichnet, dass** die Dauer zwischen dem Inkontaktbringen des Gipses und seinem vollständigen Brennen weniger als 10 Sekunden beträgt.

25. Verfahren nach einem der Ansprüche 19 bis 22, **dadurch gekennzeichnet, dass** das Brennen (v) das Inkontaktbringen des Gipses mit den Heißgasen umfasst, wobei das Brennen in einem Wirbelbett durchgeführt wird.

26. Verfahren nach einem der Ansprüche 19 bis 25, **dadurch gekennzeichnet, dass** der Schritt des Brennens eine Beförderung des Gipses vom Auslass der zweiten Leitung durch Mitnahme durch Heißgase umfasst.

27. Verfahren nach einem der Ansprüche 19 bis 26, **dadurch gekennzeichnet, dass** die Verweilzeit des Gipses und/oder des Bassanits in der zweiten Leitung zwischen 30 Sekunden und 5 Minuten beträgt.

28. Verfahren nach einem der Ansprüche 19 bis 22, **dadurch gekennzeichnet, dass** der Schritt des indirekten Wärmeaustausches zwischen dem Gips und den Heißgasen den Schritt des Brennens umfasst.

29. Verfahren nach einem der Ansprüche 19 bis 22, **dadurch gekennzeichnet, dass** die Schritte (iii) der Mitnahme des Gipses und (iv) des indirekten Wärmeaustausches das Trocknen und mindestens teilweise das Brennen (v) des Gipses zu Bassanit umfassen, wobei das Brennen (v) durch das Inkontaktbringen des Gipses mit den Heißgasen ergänzt wird, wobei der ergänzte Brand ein Flash-Brand ist, wobei die Dauer der Schritte (iii) und (iv) zwischen 30 Sekunden und 5 Minuten beträgt, wobei die Dauer des Brennens durch Kontakt mit den Heißgasen zwischen 1 und 10 Sekunden beträgt.

30. Verfahren nach Anspruch 29, bei dem die Dauer der Schritte (iii) und (iv) zwischen 1 und 2 Minuten beträgt, wobei die Dauer des Brennens durch Kontakt mit den Heißgasen zwischen 2 und 5 Sekunden beträgt.

31. Verfahren nach einem der Ansprüche 19 bis 30, **dadurch gekennzeichnet, dass** es außerdem einen Schritt (iiib) des Mahlens des Gipses während des Schritts der Mitnahme (iii) umfasst.

32. Verfahren nach einem der Ansprüche 19 bis 31, das in einer Vorrichtung zum Trocknen/Brennen nach einem der Ansprüche 1 bis 18 durchgeführt wird.

33. Bassanit, der mit Hilfe des Verfahrens nach einem der Ansprüche 19 bis 32 hergestellt werden kann.

34. Bassanit nach Anspruch 33, dessen Merkmale die folgenden sind:
(i) Reaktivität:
(a) Messer-Abbindungsbeginn weniger als 6 Minuten, vorzugsweise weniger als 5 Minuten; und/oder
(b) Gillmore-Abbindung zwischen 4,5 und 6 Minuten; und/oder
(c) Vicat-Abbindungsende zwischen 10 und 12 Minuten; und
(ii) Sättigungs-Mischungsverhältnis von mindestens 140 Teilen Bassanit auf 100 Teilen Wasser; und
(iii) eine Fluidität, wie sie durch einen Ausbreitungswert höher als 205, vorzugsweise höher als 240 mm, bestimmt wird.

35. Bassanit nach Anspruch 34, dessen Merkmale die folgenden sind:
(i) Reaktivität: Messer-Abbindungsbeginn weniger als 5 Minuten; und
(ii) Sättigungs-Mischungsverhältnis von mindestens 140 Teilen Bassanit auf 100 Teilen Wasser; und
(iii) eine Fluidität, wie sie durch einen Ausbreitungswert höher als 240 mm bestimmt wird.

36. Bassanit nach Anspruch 34 oder 35, dessen BET-Oberfläche mindestens 8 m²/g beträgt.

37. Bassanit nach einem der Ansprüche 34 bis 36, der im Wasser nicht springt.

38. Bassanit nach einem der Ansprüche 34 bis 37, der frei von Gips und/oder Chlorzusatz ist.
